# EUROPEAN PATENT APPLICATION

(11) **EP 4 660 063 A1**
(43) Date of publication of application: **10.12.2025**
(21) Application number: 24180496.2
(22) Date of filing: 06.06.2024
(51) Int. Cl.: B62D 57/00, B62D 63/00

(54) **MOVABLE DEVICE AND METHOD OF MOVING THE DEVICE**

(71) Applicant: Razumov, Sergey, 2047 Strovolos (CY)
(72) Inventor: RAZUMOV, Sergey, 2047 Strovolos (CY); SULTANOV, OLEG, Palm Jumeirah Dubai (AE)
(74) Representative: Jeck, Jonathan

(57) **Abstract**

The mobile device has the shape of a regular tetrahedron and is equipped with push rods that are positioned on the surfaces of the device. These push rods can be extended outward beyond the surface of the device's surfaces, thereby repelling the device from the surrounding solid surfaces and thus moving it. The push rods can be set in motion by an electric motor or another known motor type. The device can move either by tipping when the push rods interact with a horizontal or nearly horizontal surface, or it can glide on the support surface and rotate relative to it. Combined movements are also possible when several push rods interact simultaneously with one or more support surfaces.

## Description

The invention relates to a mobile device and a method for moving the device.

Mobile devices are widespread in many areas, from consumer electronics to industrial applications. The movement of these devices can be achieved in various ways, for example, by wheels, tracks, or legs. The choice of the method of movement depends on many factors, including the type of surface on which the device is to move and the specific requirements of the application.

A special field of mobile devices includes devices that can move on surfaces with uneven relief and without special road coverings. For such applications, complex technology is required, such as a tracked or wheeled all-terrain vehicle, which consists of a large number of expensive parts. Moreover, the limitations for such expensive devices include the insufficient hardness of the surface on which the movement takes place, as well as obstacles such as cracks in the earth, riverbeds, channels, etc.

A known model of a mobile device is the tetrahedral mobile device, which contains 12 rotating rods around their axes, 3 on each imaginary surface of the device, by rotating which the device can move in such a way that it moves from a stable position on its three support corners to another stable position on other three support points.

However, this device has several disadvantages, including the inability to move on surfaces with a steep gradient, the inability to move the device on uneven, hilly surfaces, the inability to move the support surface vertically, the inability to balance the position of the device's surfaces, and the inability to combine the movement of the device.

Based on the above state of the art, the object of the invention is to provide a remedy.

The set task is solved by the features of claim 1.

It is recognized that the invention is realized at least when generic polyhedra include means that are suitable for moving the center of gravity of the polyhedron along a curve with a local maximum. The z-value of the local maximum in the coordinate system (x,y,z) is greater than 0, z>0.

The present invention relates to a mobile device that preferably has the shape of a regular tetrahedron and has three rods on each of the four surfaces of the device.

The rods can be extended outward beyond the surface of the device's surfaces, thereby repelling the device from the surrounding solid surfaces and thus moving it. Depending on the position of the surfaces with which the device's rods interact, it can either be moved by tipping (rolling) when the rods interact with a horizontal or nearly horizontal surface on which the device is supported with its lower surface. The device can glide on the support surface and rotate relative to it. Combined movements are also possible when several rods interact simultaneously with one or more support surfaces.

According to an advantageous development of the invention, the device can have the shape of a polyhedron, in particular a regular tetrahedron, with a central center of gravity. It can have at least one impulse generator or energy converter as well as surfaces that are supported on the ground. The impulse generator can set the center of gravity in motion by increasing the potential energy of the center of gravity to the local maximum and then minimizing it. This means that the device can be moved by converting potential energy into kinetic energy, with the impulse generator serving as a mechanism for generating this movement.

According to further aspects of the invention, the impulse generators can be designed as rams that extend and retract from the surfaces and are supported on the ground. This means that the rams can serve as mechanical elements that expand and contract to move the device. Alternatively, the rams can also have other shapes or mechanisms to enable the movement of the device.

According to further aspects of the invention, the rams can have individual drives, with three rams positioned near each corner of the surface on each surface of the mobile device. This means that each of the rams can be operated independently to allow precise control of the movement of the device. Alternatively, the rams can also have other arrangements or configurations to enable different types of movements.

According to further aspects of the invention, the travel path of the rams can be arc-shaped, and a ring gear can be positioned on the radial surface of the sector. This means that the rams can move along a curved path to enable a rotational movement of the device. Alternatively, the rams can also have other movement paths or mechanisms to enable different types of movements.

According to further aspects of the invention, the rams can be movable in both directions and protrude relative to the corners of the surfaces. This means that the rams can be moved in both directions to allow greater flexibility in the movement of the device. Alternatively, the rams can also have other directions of movement or mechanisms to enable different types of movements.

According to further aspects of the invention, the number of rams with double-sided action can be twice as large as the number of their individual drives. This means that the device can enable efficient use of the drives by reducing the number of drives needed. Alternatively, the device and the rams can also have other configurations or mechanisms to enable efficient use of the drives.

According to further aspects of the invention, the rams can have a length that exceeds the space of the tetrahedral body of the device and protrude beyond the boundaries of the surfaces. This means that the rams can have a sufficient length to effectively move the device. Alternatively, the rams can also have other lengths or shapes to enable the movement of the device.

According to further aspects of the invention, the rams can be telescopic. This means that the rams can extend and retract to enable the movement of the device. Alternatively, the rams can also have other mechanisms or configurations to enable the movement of the device.

According to further aspects of the invention, rolling devices can be positioned at the corners of the body. This means that the device can have rolling devices to facilitate its movement. Alternatively, the device and the rolling devices can also have other configurations or mechanisms to enable the movement of the device.

According to further aspects of the invention, the rolling devices can be positioned at least on one surface of the body at their corners. This means that the rolling devices can be positioned at strategic locations on the device to enable efficient movement. Alternatively, the rolling devices can also be positioned at other locations on the device to enable different types of movements.

According to further aspects of the invention, at least one rolling device can be driven. This means that the rolling devices can be motorized to enable active movement of the device. Alternatively, the rolling devices can also have other drive mechanisms or configurations to enable the movement of the device.

According to further aspects of the invention, at least one rolling device can be rotatably mounted. This means that the rolling devices can be rotatable to enable low-friction movement of the device. Alternatively, the rolling devices can also have other bearing mechanisms or configurations to enable the movement of the device.

According to further aspects of the invention, a method for moving devices can be provided, in which the surfaces can be brought into contact with the support surface and the surface can have controllable rams, so that the device can be tipped from one support surface to another. This means that the device can be moved by a combination of contact with the support surface and the movement of the rams. Alternatively, the device can also have other movement mechanisms or methods to enable its movement.

According to further aspects of the invention, during the tiltable movement of the device, two oppositely directed rams can be operable in different directions, with one ram exerting a repelling effect while the other ram acts as a catching ram. This means that the device can perform a controlled tipping movement by coordinating the actions of the two oppositely directed rams. Alternatively, the device can also have other movement mechanisms or methods to enable its movement.

An embodiment of the invention is schematically illustrated in the drawing.

It shows:
Fig. 1 shows a perspective view of a mobile device with extendable rods and movement mechanisms,
Fig. 2 represents a perspective view of a tetrahedral mobile device positioned on a support surface,
Fig. 3a shows a perspective view of a mobile device during a movement sequence, where an extendable rod exerts a force on a support surface,
Fig. 3b illustrates a perspective view of a mobile device interacting with a support surface, where an extendable rod exerts a force and a second rod extends or retracts,
Fig. 4 shows a perspective view of a tetrahedral mobile device during a movement sequence, where an extendable rod exerts a force on a support surface and the device tips around an axis,
Fig. 5 represents a perspective view of a tetrahedral mobile device resting on a support surface,
Fig. 6 shows a perspective view of a mobile device interacting with a support surface, where three extendable rods extend to different lengths from the base of the device,
Fig. 7 illustrates a perspective view of a mobile device in relation to a vertical cylindrical surface and a support surface, where an extendable rod extends towards the vertical surface,
Fig. 8 shows a top view of a mobile device positioned on a support surface, where an extendable rod extends towards a vertical cylindrical surface,
Fig. 9 represents a top view of a tetrahedral mobile device positioned in relation to a support surface and a vertical cylindrical surface, where an extendable rod extends towards the vertical surface,
Fig. 10 shows a perspective view of a mobile device, where the extendable rods are driven by movement mechanisms capable of extending and retracting the rods,

In the following description, exemplary aspects of the present invention are set forth. This description is not to be construed as limiting the scope of the present disclosure.

Rather, the description also includes combinations and modifications of the exemplary aspects described herein.

The present disclosure relates to a mobile device and methods of its movement. In particular, the mobile device can have the shape of a regular tetrahedron and is equipped with push rods that lie on the projections of lines on the surfaces that connect the geometric center of mass of the tetrahedron with its peaks. The push rods can be extended outward beyond the surface of the device's surfaces, thereby repelling the device from the surrounding solid surfaces and thus moving it.

In some aspects, the mobile device can be moved on surfaces with uneven relief and without special road coverings. This can be achieved by using complex techniques, such as a tracked or wheeled all-terrain vehicle, which consists of a large number of expensive parts. Moreover, the limitations for such expensive devices include the insufficient hardness of the surface on which the movement takes place, as well as obstacles such as cracks in the earth, riverbeds, channels, etc.

In some cases, the mobile device can move by tipping (rolling) when the push rods interact with a horizontal or nearly horizontal surface on which the device is supported with its lower surface. Alternatively, the device can glide on the support surface and rotate relative to it, this happens when the push rods, which are currently not on the device's support surface, interact with vertical or nearly vertical surfaces. Combined movements are also possible when several push rods interact simultaneously with one or more support surfaces.

The push rods can be set in motion by an electric motor via a gearbox or another known motor type. In the presented device, the push rods have the shape of an arc and have a ring gear on their inside, through which they are set in motion.

The ability to move two or more push rods simultaneously allows the device to perform combined movements, such as rolling with simultaneous rotation, horizontal alignment of one of the device's surfaces, movement of the support surface upwards and also under specific conditions, to climb upwards.

Furthermore, the shape and size of the push rods in the presented device allow them to be made into double-acting push rods, so that when a movement from the drive of the push rod in one direction, it goes beyond the boundary of one side of the tetrahedron, and in its movement in the other direction - the push rod moves beyond the boundary of the second side of the tetrahedron at its furthest point, relative to the peak of the first side.

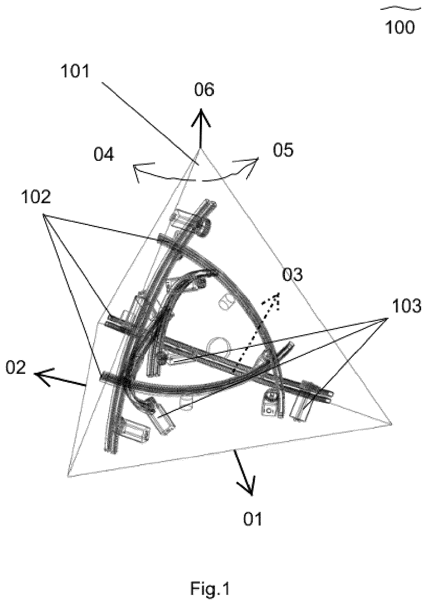

Fig.1 shows an embodiment of the mobile device 100. The mobile device 100 comprises a device housing 101 and articulated rods 102, which are connected to movement mechanisms 103. The articulated rods 102 are capable of extending from the device housing 101 to interact with the environment and enable various movements of the mobile device 100. The figure illustrates several directions of movement: downward tipping direction 01, left-side tipping direction 02, diagonally right-side tipping direction 03, left-side sliding-rotational direction 04, right-side sliding-rotational direction 05, and upward vertical movement direction 06. These directions indicate the potential of the mobile device 100 to tip, slide, and move vertically, enabled by the articulated rods 102 and movement mechanisms 103.

In some embodiments, the mobile device 100 can have the shape of a regular tetrahedron. The device housing 101 can be made from various materials to handle different surface textures and hardnesses. For example, the device housing 101 can be made from a hard material like steel for solid surfaces or from a softer material like rubber for uneven or slippery surfaces.

The articulated rods 102 can have different shapes to enable various types of movements. For example, they can have a conical or cylindrical shape to enable a rotational movement, or they can have a flat or curved shape to enable a sliding movement.

The movement mechanisms 103 can be configured in various ways to enable different movement patterns of the mobile device 100. For example, they can be configured to move the articulated rods 102 in a specific order or in a random order, or they can be configured to move the articulated rods 102 simultaneously or sequentially.

The movement mechanisms 103 can use various types of motors to move the articulated rods 102. For example, they can use electric motors, combustion engines, linear motors, or other types of motors.

The mobile device 100 can include additional sensors to control its movement. For instance, it could contain acceleration sensors, gyroscopes, infrared sensors, or other types of sensors to measure its position, orientation, speed, or other motion parameters.

The mobile device 100 can have additional features to expand its application. For example, it could be used as a robot, drone, toy, means of transportation, or other types of devices.

The mobile device 100 can have additional safety features to prevent accidents or damage. For instance, it could include shock absorbers, airbags, seat belts, or other types of safety devices.

The mobile device 100 can have additional energy sources to extend its operating time. For example, it could contain batteries, solar cells, fuel cells, or other types of energy sources.

The mobile device 100 can have additional communication functions to interact with other devices or systems. For instance, it could include Wi-Fi, Bluetooth, NFC, or other types of communication technologies.

It is to be noted that all the above aspects and variations are to be understood as exemplary and not limiting. Features from all embodiments can be exchanged or mixed with features from other embodiments, and each feature from any embodiment is disclosed independently of all other features of each individual embodiment.

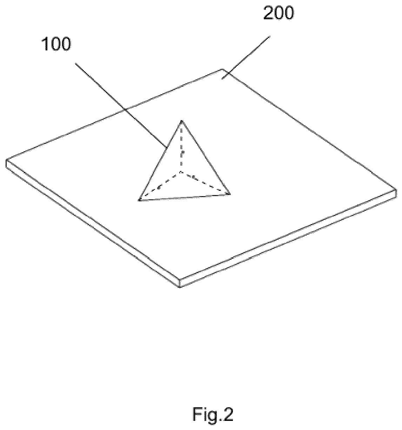

Fig. 2 shows an isometric view of a tetrahedral mobile device 100 positioned on a support surface 200. The tetrahedral mobile device 100 is shown resting on one of its triangular faces, with the vertex pointing upwards, indicating a stable resting position on the support surface 200. The support surface 200 appears flat and extends beneath the tetrahedral mobile device 100, providing a base on which the device can rest.

In some aspects, the mobile device 100 can be positioned on a variety of surfaces, including, but not limited to, flat, inclined, uneven, or slippery surfaces. In some cases, the mobile device 100 can rest on one of its triangular faces, while in other cases, the mobile device 100 can rest on one of its edges or vertices. In some embodiments, the mobile device 100 can be configured to self-align to achieve a stable resting position on the support surface 200, regardless of the orientation of the support surface 200. In some cases, the mobile device 100 may have additional mechanisms or devices to increase its stability on the support surface 200, such as suction cups, magnets, hooks, or other types of fastening elements.

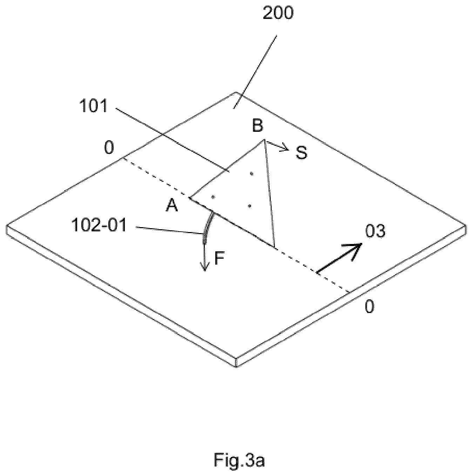

Fig.3a shows a perspective of a mobile device 100 in the midst of a movement sequence. The device housing 101 is positioned on a support surface 200. An extendable actuator 102-01 exerts a force F on the support surface 200, causing the device to tilt around the axis of rotation 0. The diagonal right-side tipping direction 03 indicates the potential movement or rotation of the device, with the vertex A being lifted by the force arrow F and vertex B remaining as the tetrahedron's topmost point. The dashed lines connecting the vertices of the tetrahedron to the center of its base indicate the axis around which the device tilts.

In some embodiments, the mobile device 100 can perform a variety of movements, including, but not limited to, tipping, sliding, rotating, and vertical moving. In some cases, the mobile device 100 can tip by using extendable actuators 102-01, 102-02, 102-03 that extend from the surfaces of the device housing 101 and are supported on the support surface 200. In some embodiments, the extendable actuators 102-01, 102-02, 102-03 can be operated in a specific sequence or in a random order to enable different movement patterns of the mobile device 100. In some cases, the extendable actuators 102-01, 102-02, 102-03 can be operated simultaneously or sequentially to enable complex movements of the mobile device 100. In some embodiments, the extendable actuators 102-01, 102-02, 102-03 can be configured to extend beyond the surfaces of the device housing 101 to repel the mobile device 100 from the surrounding solid surfaces and thus move it. In some cases, the extendable actuators 102-01, 102-02, 102-03 can be configured to retract within the device housing 101 to stabilize the mobile device 100 on the support surface 200.

It is to be noted that all the above aspects and variations are to be understood as exemplary and not limiting. Features from all embodiments can be exchanged or mixed with features from other embodiments, and each feature from any embodiment is disclosed independently of all other features of each individual embodiment.

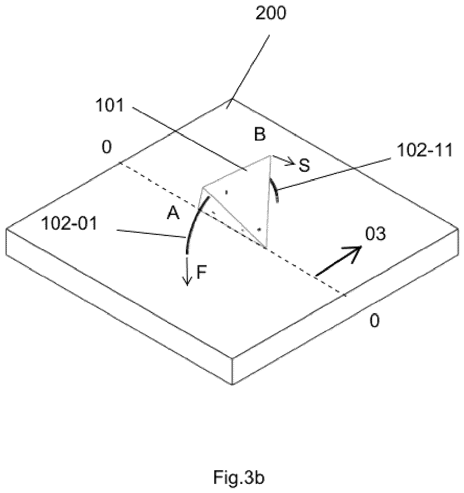

Fig.3b shows a perspective of a mobile device 100 interacting with a support surface 200. The device housing 101 of the device is shown with one of its vertices, marked as A, being lifted by the force-exerting extendable actuator 102-01, which exerts a force F on the support surface 200. The retractable extendable actuator 102-11 is positioned opposite of 102-01 and appears to be retracting or extending, as indicated by the distance marker S. The axis of rotation 0 is indicated by dashed lines, suggesting the axis around which the device tilts. The direction arrow 03 points away from vertex A, indicating the potential movement or rotation of the device. Vertex B is represented as the topmost point of the device housing 101 in this phase of movement.

During the tilting movement of the mobile device 100, in some embodiments, two oppositely directed actuators (extendable actuator 102-01, retractable extendable actuator 102-11) can be operated in different directions. One actuator (extendable actuator 102-01) can exert a repelling effect (surface with corner A), while the other actuator (retractable extendable actuator 102-11) can act as a catching actuator (surface with corner B). In some cases, the extendable actuator 102-01 can be configured to extend beyond the surface of the device housing 101 to repel the mobile device 100 from the support surface 200 and thus move it. In other cases, the retractable extendable actuator 102-11 can be configured to retract within the device housing 101 to stabilize the mobile device 100 on the support surface 200.

It is to be noted that all the above aspects and variations are to be understood as exemplary and not limiting. Features from all embodiments can be exchanged or mixed with features from other embodiments, and each feature from any embodiment is disclosed independently of all other features of each individual embodiment.

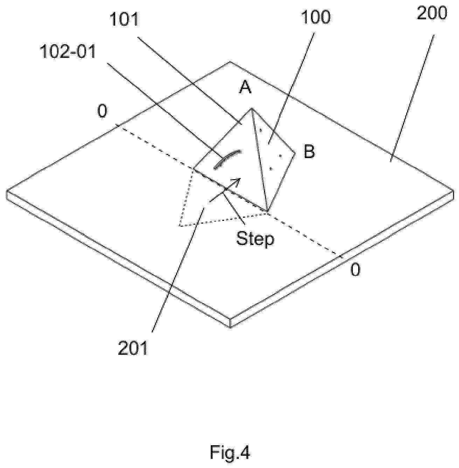

Fig. 4 shows a perspective of a tetrahedral mobile device 100 during a movement sequence. The device housing 101 is depicted in a position where one of its vertices, marked as A, is raised above a support surface 200, while the opposite vertex, marked as B, is in the upper position. An extendable actuator 102-01 is stretched out from one of the edges of the tetrahedral mobile device 100 and exerts a force on the support surface 200, apparently causing the device to tilt around an axis indicated by the dashed lines 0. The dashed outline represents the original device position 201 and shows the previous position of the tetrahedral mobile device 100 before it moved. The term "step" refers to the distance or movement of the tetrahedral mobile device 100 from its original position to its current position.

In some embodiments, the mobile device 100 can perform a variety of movements, including, but not limited to, tipping, sliding, rotating, and vertical moving. In some cases, the mobile device 100 can tip by using extendable actuators 102-01, 102-02, 102-03 that extend from the surfaces of the device housing 101 and are supported on the support surface 200. In some embodiments, the extendable actuators 102-01, 102-02, 102-03 can be operated in a specific sequence or in a random order to enable different movement patterns of the mobile device 100. In some cases, the extendable actuators 102-01, 102-02, 102-03 can be operated simultaneously or sequentially to enable complex movements of the mobile device 100. In some embodiments, the extendable actuators 102-01, 102-02, 102-03 can be configured to extend beyond the surfaces of the device housing 101 to repel the mobile device 100 from the surrounding solid surfaces and thus move it. In some cases, the extendable actuators 102-01, 102-02, 102-03 can be configured to retract within the device housing 101 to stabilize the mobile device 100 on the support surface 200.

It is to be noted that all the above aspects and variations are to be understood as exemplary and not limiting. Features from all embodiments can be exchanged or mixed with features from other embodiments, and each feature from any embodiment is disclosed independently of all other features of each individual embodiment.

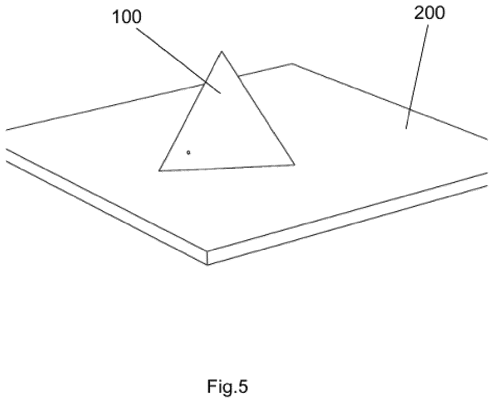

Fig. 5 shows a perspective of a tetrahedral mobile device 100 in relation to a support surface 200. The tetrahedral mobile device 100 is shown resting on the support surface 200, with its base in contact with the surface and one of its vertices pointing upwards, indicating a stable resting position. The interaction between the tetrahedral mobile device 100 and the support surface 200 suggests that the device is capable of maintaining stability while positioned on the flat surface.

In some embodiments, the mobile device 100 can be positioned on a variety of surfaces, including, but not limited to, flat, inclined, uneven, or slippery surfaces. In some cases, the mobile device 100 can rest on one of its triangular faces, while in other cases, the mobile device 100 can rest on one of its edges or vertices. In some embodiments, the mobile device 100 can be configured to self-align to achieve a stable resting position on the support surface 200, regardless of the orientation of the support surface 200. In some cases, the mobile device 100 may have additional mechanisms or devices to increase its stability on the support surface 200, such as suction cups, magnets, hooks, or other types of fastening elements.

It is to be noted that all the above aspects and variations are to be understood as exemplary and not limiting. Features from all embodiments can be exchanged or mixed with features from other embodiments, and each feature from any embodiment is disclosed independently of all other features of each individual embodiment.

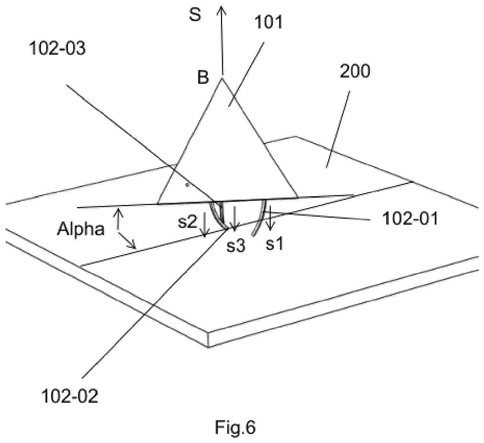

Fig. 6 shows a perspective of a mobile device 100 interacting with a support surface 200. The device housing 101 of the mobile device is raised above the support surface 200, supported by three extendable actuators: extendable actuator 102-01, extendable actuator two 102-02, and extendable actuator three 102-03. Each actuator extends a different distance from the base of the device housing 101, indicated by extension distance one s1, extension distance two s2, and extension distance three s3. The vertical movement of the device housing 101 away from the support surface 200 is denoted by the arrow S, and an angle Alpha indicates the device's potential to adjust its orientation relative to the support surface 200.

In some embodiments, the mobile device 100 can perform a variety of movements, including, but not limited to, tipping, sliding, rotating, and vertical moving. In some cases, the mobile device 100 can tip by using extendable actuators 102-01, 102-02, 102-03 that extend from the surfaces of the device housing 101 and are supported on the support surface 200. In some embodiments, the extendable actuators 102-01, 102-02, 102-03 can be operated in a specific sequence or in a random order to enable different movement patterns of the mobile device 100. In some cases, the extendable actuators 102-01, 102-02, 102-03 can be operated simultaneously or sequentially to enable complex movements of the mobile device 100. In some embodiments, the extendable actuators 102-01, 102-02, 102-03 can be configured to extend beyond the surfaces of the device housing 101 to repel the mobile device 100 from the surrounding solid surfaces and thus move it. In some cases, the extendable actuators 102-01, 102-02, 102-03 can be configured to retract within the device housing 101 to stabilize the mobile device 100 on the support surface 200.

It is to be noted that all the above aspects and variations are to be understood as exemplary and not limiting. Features from all embodiments can be exchanged or mixed with features from other embodiments, and each feature from any embodiment is disclosed independently of all other features of each individual embodiment.

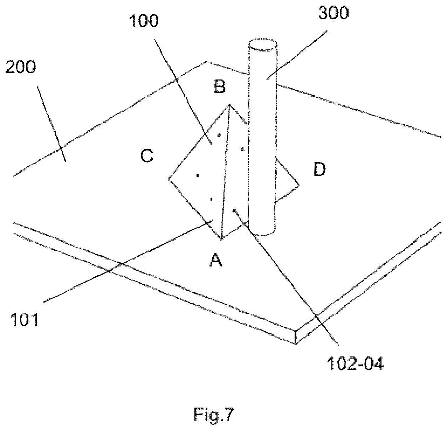

Fig. 7 shows a perspective of a mobile device 100 in relation to a vertical cylindrical surface 300 and a support surface 200. The mobile device 100 is tetrahedrally shaped, with its device housing 101 resting on the support surface 200. An extendable rod 102-04 is depicted extending from the edge of the device housing 101 towards the vertical cylindrical surface 300, indicating the interaction between the mobile device 100 and the surfaces 200 and 300.

In some embodiments, the mobile device 100 can be positioned on a variety of surfaces, including, but not limited to, flat, inclined, uneven, or slippery surfaces. In some cases, the mobile device 100 can rest on one of its triangular faces, while in other cases, the mobile device 100 can rest on one of its edges or vertices. In some embodiments, the mobile device 100 can be configured to self-align to achieve a stable resting position on the support surface 200, regardless of the orientation of the support surface 200. In some cases, the mobile device 100 may have additional mechanisms or devices to increase its stability on the support surface 200, such as suction cups, magnets, hooks, or other types of fastening elements.

In some embodiments, the extendable rod 102-04 can be configured to extend beyond the edge of the device housing 101 to repel the mobile device 100 from the vertical cylindrical surface 300 and thus move it. In other cases, the extendable rod 102-04 can be configured to retract within the device housing 101 to stabilize the mobile device 100 on the support surface 200.

It is to be noted that all the above aspects and variations are to be understood as exemplary and not limiting. Features from all embodiments can be exchanged or mixed with features from other embodiments, and each feature from any embodiment is disclosed independently of all other features of each individual embodiment.

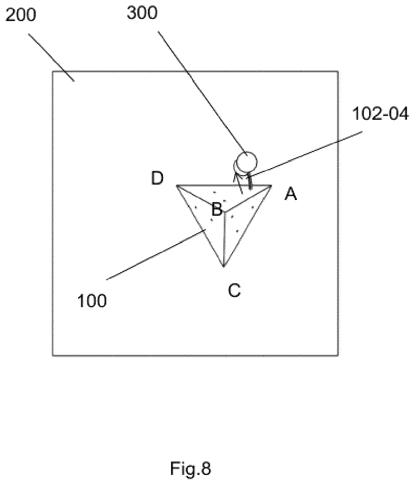

Fig. 8 shows a top view of a mobile device 100 positioned on a support surface 200. An extendable rod 102-04 extends from the mobile device 100 towards a vertical cylindrical surface 300. The mobile device 100 is depicted with vertices A, B, C, and D, with the extendable rod 102-04 positioned over the edge connecting vertices A and B. The relationship between the elements suggests that the extendable rod 102-04 is capable of interacting with the vertical cylindrical surface 300, which may facilitate the movement or stabilization of the mobile device 100 on the support surface 200.

In some embodiments, the mobile device 100 can be positioned on a variety of surfaces, including, but not limited to, flat, inclined, uneven, or slippery surfaces. In some cases, the mobile device 100 can rest on one of its triangular faces, while in other cases, the mobile device 100 can rest on one of its edges or vertices. In some embodiments, the mobile device 100 can be configured to self-align to achieve a stable resting position on the support surface 200, regardless of the orientation of the support surface 200. In some cases, the mobile device 100 may have additional mechanisms or devices to increase its stability on the support surface 200, such as suction cups, magnets, hooks, or other types of fastening elements.

In some embodiments, the extendable rod 102-04 can be configured to extend beyond the edge of the device housing 101 to repel the mobile device 100 from the vertical cylindrical surface 300 and thus move it. In other cases, the extendable rod 102-04 can be configured to retract within the device housing 101 to stabilize the mobile device 100 on the support surface 200.

It is to be noted that all the above aspects and variations are to be understood as exemplary and not limiting. Features from all embodiments can be exchanged or mixed with features from other embodiments, and each feature from any embodiment is disclosed independently of all other features of each individual embodiment.

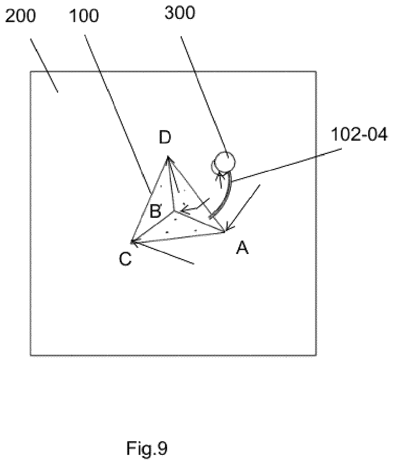

Fig. 9 shows a top view of a tetrahedral mobile device 100 in relation to a support surface 200 and a vertical cylindrical surface 300. The tetrahedral mobile device 100 is shown with one of its extendable rods 102-04 extending towards the vertical cylindrical surface 300. This extendable rod 102-04 is positioned over the edge connecting vertices A and B, indicating a potential interaction between the mobile device 100 and the vertical surface 300 that could facilitate movement or stabilization. The support surface 200 provides a base on which the tetrahedral mobile device 100 can rest, while the vertical cylindrical surface 300 serves as a contact point for the extendable rod 102-04.

In some embodiments, the mobile device 100 can be positioned on a variety of surfaces, including, but not limited to, flat, inclined, uneven, or slippery surfaces. In some cases, the mobile device 100 can rest on one of its triangular faces, while in other cases, the mobile device 100 can rest on one of its edges or vertices. In some embodiments, the mobile device 100 can be configured to self-align to achieve a stable resting position on the support surface 200, regardless of the orientation of the support surface 200. In some cases, the mobile device 100 may have additional mechanisms or devices to increase its stability on the support surface 200, such as suction cups, magnets, hooks, or other types of fastening elements.

In some embodiments, the extendable rod 102-04 can be configured to extend beyond the edge of the device housing 101 to repel the mobile device 100 from the vertical cylindrical surface 300 and thus move it. In other cases, the extendable rod 102-04 can be configured to retract within the device housing 101 to stabilize the mobile device 100 on the support surface 200.

It is to be noted that all the above aspects and variations are to be understood as exemplary and not limiting. Features from all embodiments can be exchanged or mixed with features from other embodiments, and each feature from any embodiment is disclosed independently of all other features of each individual embodiment.

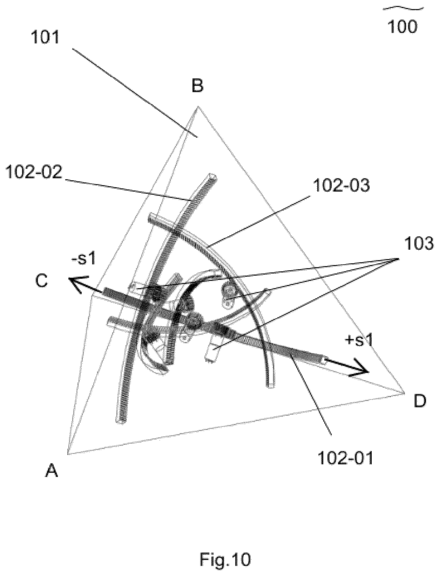

Fig. 10 shows a perspective view of a mobile device 100. The device housing 101 is tetrahedrally shaped, with vertices A, B, C, and D. The first extendable actuator 102-01, the second extendable actuator 102-02, and the third extendable actuator 102-03 are depicted extending from the corners of the device housing 101. The movement mechanism 103 is connected to the extendable actuators, indicating its role in operating the rods. The arrows, marked as +s1 and -s1, indicate the ability of the extendable actuators to extend and retract, thereby changing the position of the mobile device 100 in relation to the surface with which it interacts.

In some embodiments, the extendable actuators 102-01, 102-02, 102-03 can have individual drives 103, with three extendable actuators 102 positioned near each corner of the surface of the mobile device 100. In other embodiments, the extendable actuators 102 can be movable on both sides and protrude relative to the corners of the surfaces. In some cases, the number of extendable actuators 102 with double-sided action can be twice as large as the number of their individual drives 103. In some embodiments, the extendable actuators 102 can have a length that exceeds the space of the tetrahedral body 101 of the device and protrude beyond the boundaries of the surfaces. In other cases, the extendable actuators 102 can be telescopic.

Fig. 11 shows another embodiment of the mobile device 100, which is located on a flat support surface 200 with a special solid coating (for example, asphalt, concrete, or similar), equipped with corner elements 104 on the housing 101, in which rolling devices 105 are located. In the illustration, three rolling devices are shown on just one surface of the device, the support surface, in the corner elements 104-01, 104-02, 104-03. It can be seen that the rolling devices 105 have the shape of discs (plates, wheels), but can also take on another suitable shape (spheroid, tracks, etc.).

The rolling devices can, as shown in the illustration, be mounted on just one surface of the device 100 or on all its surfaces. In the device variant proposed in Figure 11, there are three rolling devices (105), two of which, located in the corner elements 104-01, 104-02, are passive support devices, and the third rolling device 105, which is within the corner element 104-03, is driven and rotatable and allows the mobile device to move on a specially prepared coating by rolling at higher speed and with less energy expenditure. It is also to be understood that, if desired, all rolling devices 105 of the mobile device 100 can be driven and controllable. In addition, these rolling devices can either be retracted into the housing of the mobile device 100 when it moves over uneven terrain, or they can constantly protrude beyond the boundaries of all surfaces of the device, which allows the mobile device 100, when equipped with rubber tires or a similar damping material, to operate more softly and its payload to experience less vibration and acceleration.

It is to be noted that all the above aspects and variations are to be understood as exemplary and not limiting. Features from all embodiments can be exchanged or mixed with features from other embodiments, and each feature from any embodiment is disclosed independently of all other features of each individual embodiment.

## Claims

1. Device in the form of a polyhedron, in particular a regular tetrahedron, with a center of gravity, with at least one impulse generator (energy converter) as well as surfaces that are supported on the ground, **characterized in that** the impulse generator sets the center of gravity in motion by increasing the potential energy of the center of gravity to the local maximum and then minimizing the potential energy.

2. Device according to claim 1, **characterized in that** the impulse generators are designed as rams (102) that extend and retract from the surfaces and are supported on the ground.

3. Device according to claim 1 or 2, **characterized by** rams (102) with individual drives (103), with three rams (102) positioned near each corner of the surface on each surface of the mobile device (100).

4. Device according to one of claims 1 to 3, **characterized in that** the travel path of the rams (102) is arc-shaped and that a ring gear is positioned on the radial surface of the sector.

5. Device according to one of claims 1 to 4, **characterized in that** the rams (102) are double-sided movable and protrude relative to the corners of the surfaces (Fig.10).

6. Device according to one of claims 1 to 5, **characterized in that** the number of rams (102) with double-sided action is twice as large as the number of their individual drives (103).

7. Device according to one of claims 1 to 6, **characterized in that** the rams (102) have a length that exceeds the space of the tetrahedral body (101) of the device and protrude beyond the boundaries of the surfaces.

8. Device according to one of claims 1 to 7, **characterized in that** the rams (102) are telescopic.

9. Device according to one of claims 1 to 8, **characterized in that** rolling devices (105) are positioned at the corners of the body (101).

10. Device according to one of claims 1 to 9, **characterized in that** the rolling devices (105) are positioned at least on one surface of the body (101) at their corners.

11. Device according to one of claims 1 to 10, **characterized in that** at least one rolling device (105) is driven.

12. Device according to one of claims 1 to 11, **characterized in that** at least one rolling device (105) is rotatably mounted.

13. Method for moving devices according to one of claims 1 to 12, **characterized in that** the surfaces can be brought into contact with the support surface and that the surface has controllable rams, so that the device can be tipped from one support surface to another.

14. Method according to claim 13, **characterized in that** during the tiltable movement of the device (100), two oppositely directed rams (102-01, 102-11) (Fig.3b) can be operated in different directions, with one ram (102-01) exerting a repelling effect (surface with corner A), while the other ram (102-11) acts as a catching ram (surface with corner B).
